# EUROPEAN PATENT APPLICATION

(11) **EP 4 734 334 A1**
(43) Date of publication of application: **29.04.2026**
(21) Application number: 25209174.9
(22) Date of filing: 16.10.2025
(51) Int. Cl.: H02K 3/24, H02K 1/18, H02K 1/20

(54) **ELECTRIC MACHINE AND METHOD FOR ASSEMBLY THE SAME ELECTRIC MACHINE**

(30) Priority: 25.10.2024 IT 202400023949
(71) Applicant: FPT Industrial S.p.A., 10156 Torino (IT)
(72) Inventor: VASANI, Ketankumar, 9320 Arbon (CH); BESRI, Abdelhadi, 9320 Arbon (CH)
(74) Representative: Fiume, Orazio

(57) **Abstract**

Electric machine for automotive applications comprising a stator (1) including a housing (10) arranged to envelope a magnetic stator (20) arranged to be fitted within the housing, wherein the magnetic stator includes at least one longitudinal ridge (R) projecting radially from the magnetic stator and the housing includes a corresponding longitudinal slot such that the coupling of the at least longitudinal ridge and the corresponding longitudinal slot prevents a rotation of the magnetic stator with respect to the housing.

## Description

### Field of the invention

The present invention relates to the field of electric machines for vehicle propulsion and in particular to a method to assembly the electric machine.

### Description of the prior art

Typically, in electric vehicle applications, the magnetic stator of the electric machine (eMachine) is retained in housing through press fit to define an "overall stator". In the following description the set of the housing and magnetic stator is simply appealed as "stator".

The present applicant discovered that the compressive stress in stator core leads increase in iron losses during eMachine operation.

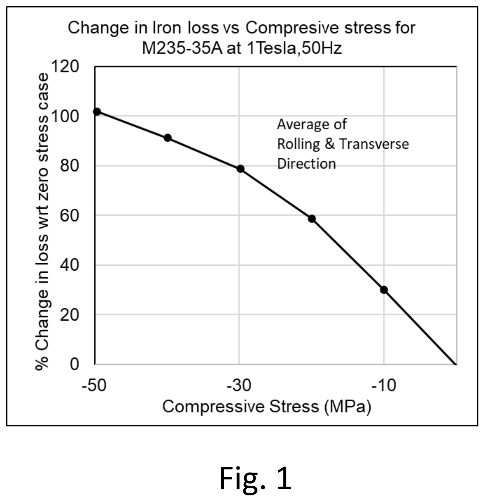

For example, chart in Fig.1 shows, 0 to 102% increase in iron loss averaged over rolling and transverse direction depending on compressive stress level in stator lamination expressed in Mpa. These additional iron losses lead to loss in electric motor efficiency and also leads to additional cooling load on cooling system and drop in overall eMachine/powertrain efficiency.

The chart of Fig. 1 discloses a comparison between a solution based on the press fit coupling with a solution that does not foresee the press fit to mount the magnetic stator within its housing. Such last solution is the subject of the present invention.

### Summary of the invention

Therefore, the main object of the present invention is to avoid the introduction of any mechanical stress in the magnetic stator to fix it within its housing, in order to minimize iron losses and reduced cooling effort leading to increase in eMachine efficiency.

The main principle of the invention is to produce the magnetic laminations such to present at least one radial projection, such that the magnetic stator, once assembled, appears as a cylinder provided with a longitudinal ridge protruding radially from the cylindrical surface of the magnetic stator. The eMachine housing is provided with at least a complementary slot arranged to receive the longitudinal ridge of the magnetic stator. Magnetic stator outer diameter surface is in transition fit with housing. In other words, there is no compression stress exerted by the housing on the magnetic stator. Of course, there is no relevant play leading to reciprocal motion between magnetic stator and housing.

The coupling ridge/slot prevents any mutual rotation of the magnetic stator with respect to its housing. Coupling ridge side walls has interference fit with slot side walls in housing preventing mutual rotation.

The axial retention between the housing and its magnetic stator can be realized on one side through a mechanical stop surface defined by the internal cavity of the housing and/or preferably through a stop surface defined in the longitudinal slot.

On the opposite side, the axial retention is realized through a snap ring and/or a sleeve.

According to a preferred embodiment of the invention, the sleeve defines also a cooling liquid distributor arranged within the housing to supply the magnetic stator.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows a comparison of iron losses between a solution based on the press fit coupling with a solution that does not foresee the press fit to mount the stator within its housing;
- Fig. 2 discloses a longitudinal section of a stator of an eMachine according to the present invention;
- Fig. 3 discloses a perspective view of a portion of a cross-section of the stator of the eMachine of figure 2;
- Fig. 4 discloses a detail according to another perspective view of the cross-section of figure 3;
- Fig. 5 discloses another detail of the eMachine of the previous figures;
- Figs. 6 and 7 disclose an optional further component of the eMachine of the previous figures.

The same reference numerals and letters in the figures designate the same or functionally equivalent parts. According to the present invention, the term "second element" does not imply the presence of a "first element", first, second, etc.. are used only for improving the clarity of the description and they should not be interpreted in a limiting way.

### Detailed description of the preferred embodiments

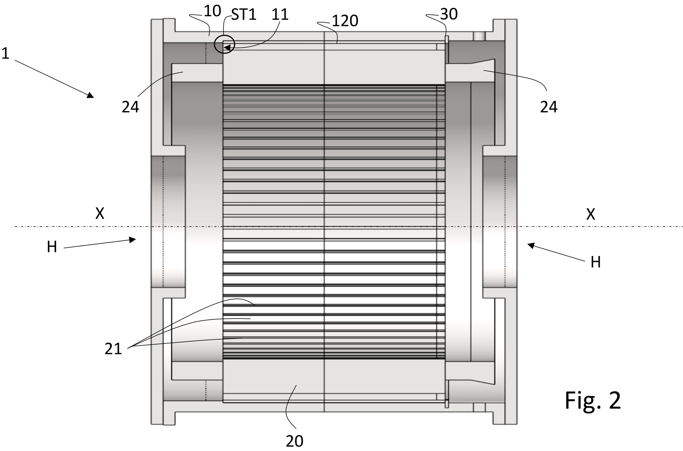

With reference to Fig. 2, the stator 1 of the eMachine according to the present invention includes a housing 10 and the magnetic stator 20. The magnetic stator 20 is made of a plurality of magnetic laminations packed to define the magnetic stator.

The magnetic laminations, according to the prior art, define the inner slots 21, arranged to retain electric conductors defining electric windings.

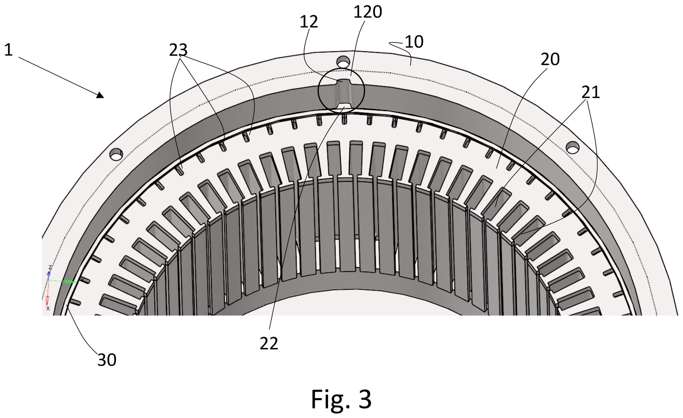

Differently from prior art, the magnetic laminations define at least one radial projection 22, see figure 3.

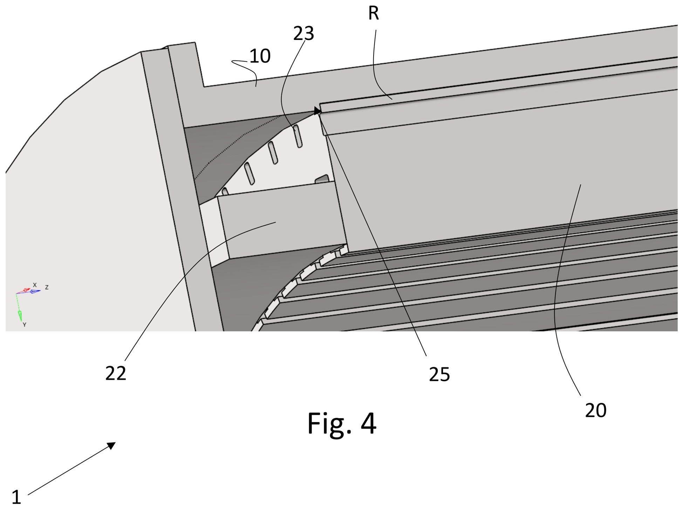

The set of the packed magnetic lamination, define a longitudinal ridge as disclosed in figure 4, protruding radially from the magnetic stator and extending longitudinally, parallel with the rotation axis "Z" of the eMachine.

The eMachine housing 10 is provided with at least a complementary slot 12 arranged to receive the longitudinal ridge 22 of the magnetic stator.

As can be seen on figure 3, the longitudinal ridge has a cross-section substantially trapezoidal.

In addition, the outer surface of the of the housing 10 is substantially cylindrical.

In addition, the major base of the trapezium is attached to the outer surface of the magnetic stator, which is substantially cylindrical.

The coupling ridge/slot prevents any mutual rotation of the magnetic stator 20 with respect to its housing 10.

The inclined walls of the trapezium are beneficial for a better distribution of the strengths.

Preferably, a plurality of ridges is defined and arranged in order to be equally distributed along the cylindrical periphery of the magnetic stator.

The slot 12 has predetermined longitudinal length, in order to define an axial mechanical stop for the magnetic stator. The surface 11 of the slot bounds axially the slot and defines a contact interface ST1 with the ridge of the magnetic stator. Preferably, a radial inward protrusion 25 from housing acting as an annular surface for the axial stop of the magnetic stator.

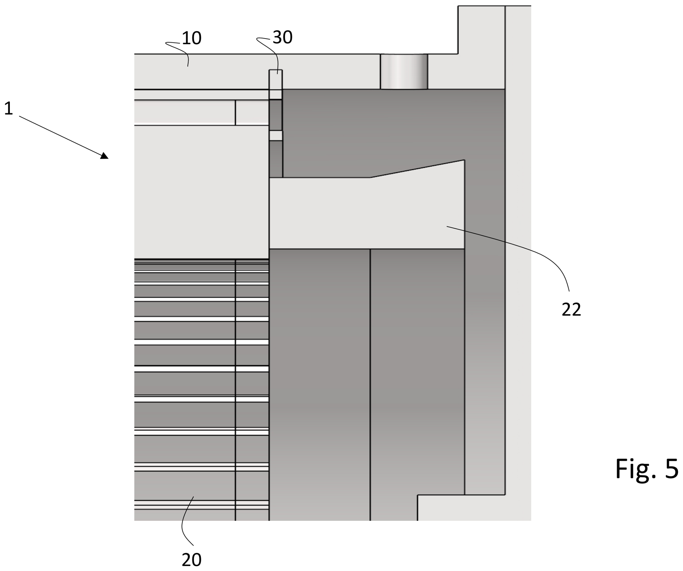

On the opposite, axial, end, according to a preferred embodiment of the present invention, the magnetic stator is retained axially by means of a snap ring 30, see Figs. 2 and 5.

The housing 10 includes an annular slot to receive the snap ring.

The annular slot along with snap ring is arranged in order to eliminate an axial movement of the magnetic stator with respect to the housing.

In Figs. 2, 4 - 6 the signs 24 indicate a schematization of the end terminals of the electric conductors, which are twisted in a known manner.

The magnetic stator comprises longitudinal cooling passages 23. A cooling liquid is introduced through the cooling passages in order to cool the stator and the electric windings.

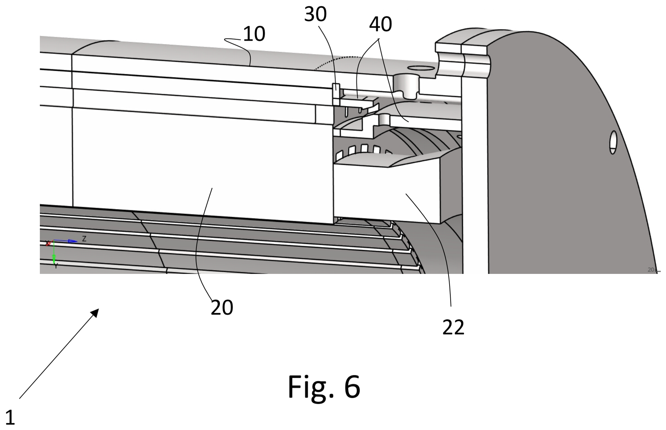

Fig. 6 discloses a further aspect of the present invention: a sleeve 40.

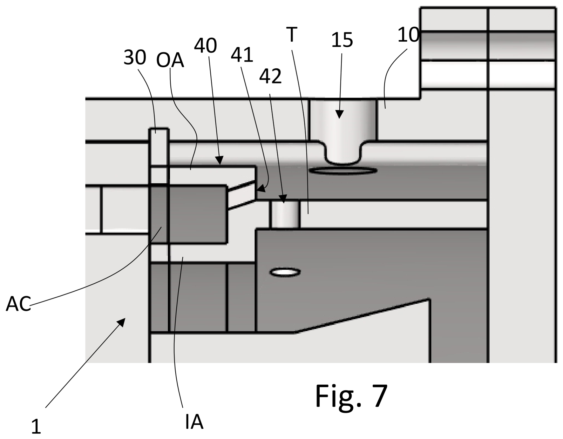

According to a longitudinal section view, see figure 7, the sleeve 40 has the shape of a Y rotated of 90° counterclockwise.

Therefore, it is possible to recognize a trunk T and a couple of arms: inner arm IA and outer arm OA.

The arms are the longitudinal section of corresponding inner and outer cylindrical surfaces.

In the same way, the trunk T is the longitudinal section of another cylindrical surface, hereinafter defined as "receiving surface".

It should be clear that the Y shape is not mandatory. The receiving surface can be cylindrical or frustoconical. In addition, the receiving surface can be adjoined to the inner and outer cylindrical surfaces in an intermediate position or even in a position such that to resulting contiguous with the inner surface.

The outer arm contacts axially the snap ring, while the inner arm directly contacts the magnetic stator or through a cooling fluid sealing gasket.

A plurality of first through holes 41 are realized in the first arm, namely in the outer cylindrical surface.

The inner and outer surfaces define an annular chamber AC arranged to receive and distribute a cooling liquid, such that the cooling liquid enters the cooling passages 23.

The receiving surface is provided of a second plurality of though holes 42.

The cooling liquid reaches the receiving surface, thus a first flow, through the first holes 41 reaches the annular chamber AC, which supplies the cooling passages 23. A second flow, reaches the electric windings through the second plurality of holes 42.

The receiving surface, in turn, receives cooling liquid from at least one though radial opening of the housing. Therefore, the sleeve 40 defines a cooling liquid distributor.

In other words, the snap ring 30 and the distributor 40 are in reciprocal contact.

According to another embodiment of the invention, the snap ring is not present or is not in direct contact with the magnetic stator, so the axial retention is carried out directly be the sleeve 40. This means that the arms have the same axial length.

It is clear that the anti-rotation assembly proposed by the present invention avoid/limit radial compression from the housing to the magnetic stator. In addition, even the axial retention is carried out in order to avoid/limit any mechanical stress on the magnetic stator.

Thanks to the present invention, 9 to 28% reduction in stator iron loss are achieved, depending on motor maximum continuous torque operating point and housing/stator interface temperature. In absolute terms, above improvement leads to 25 to 483 watt reduction in stator iron loss for this specific application.

Motor as component level efficiency increase by 0.05 to 0.19% for current application ranging between 38 to 262 kW. The improve in terms of efficiency does not consider the cooling system benefits.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. Electric machine for automotive applications comprising a stator (1) including
- a housing (10) arranged to envelope
- a magnetic stator (20) arranged to be fitted within the housing,
Wherein the magnetic stator includes at least one longitudinal ridge (R) projecting radially from the magnetic stator and the housing includes a corresponding longitudinal slot such that the coupling of the at least one longitudinal ridge and the corresponding longitudinal slot prevents a rotation of the magnetic stator with respect to the housing.

2. Machine according to claim 1, wherein the magnetic stator is axially fixed with respect to the housing
- on a first side through a stop surface defined in the longitudinal slot and/or radial inward protrusion on housing (25) and,
- on a second side, opposite to first one, through a snap ring (30) and/or a sleeve (40).

3. Machine according to claim 2, wherein the housing includes an annular groove to accommodate the snap ring (30).

4. Machine according to claim 2 or 3, wherein the sleeve (40) define a cooling liquid distributor and/or is arranged to perform axial fixing of the magnetic stator with respect to the housing.

5. Machine according to claim 4, where in the sleeve (40) defines an annular chamber arranged to supply with cooling liquid longitudinal passages (23) of the magnetic stator.

6. Machine according to claim 4 or 5, wherein the sleeve includes a plurality of openings (42) arranged to further supply cooling liquid to magnetic stator and end windings of the magnetic stator.

7. Machine according to any one of the previous claims, wherein the longitudinal ridge (R) has a cross section trapezoidal.

8. Machine according to claim 7, wherein the major basis of the trapezoidal shape is attached to an outer surface of the magnetic stator.

9. Land vehicle provided with at least a propulsion wheel and an electric machine operatively connected with the propulsion wheel, where in the electric machine is according to any one of the claims 1 - 8.

10. Method for assembly a stator (1) of an electric machine, including the step of rotatably retain a magnetic stator (20) within a corresponding housing through a ridge/slot coupling so as the housing does not exercise any radial compression on the magnetic rotor.

11. Method according to claim 10, wherein an axial retention is carried out
- on a first side through a stop surface defined in the longitudinal slot and/or radial inward protrusion from housing (25),
- on a second side, opposite to first one, through a snap ring (30) and/or a sleeve (40).
